# EUROPÄISCHE PATENTANMELDUNG

(11) **EP 1 088 705 A2**
(43) Veröffentlichungstag der Anmeldung: **04.04.2001**
(21) Anmeldenummer: 00121145.7
(22) Anmeldetag: 28.09.2000
(51) Int. Cl.: B60R 11/02

(54) **KFZ-Halterung für Mobilfunkgeräte**

(30) Priorität: 30.09.1999 DE 19947064
(71) Anmelder: SIEMENS AKTIENGESELLSCHAFT, 80333 München (DE)
(72) Erfinder: Heiss, Reinhold, 85232 Deutenhausen (DE)

(57) **Zusammenfassung**

Die vorliegende Erfindung betrifft eine KFZ-Halterung für Mobilfunkgeräte mit einer mehrpoligen Steckaufnahme im Bodenbereich und einer Koax-Steckaufnahme im oberen Rückwandbereich. Zur Aufnahme des Mobilfunkgeräts ist eine Aufnahmeschale (1) für das Mobilfunkgerät vorgesehen, welche in ihrem oberen Bereich einen der Koax-Steckaufnahme entsprechenden Koax-Stecker (3) aufweist, der mit einer Antennenanschlußleitung (4) verbindbar ist, und welche in ihrem unteren Bereich mit einem aufsteckbaren beliebig bestückbaren Steckergehäuse (2) verbindbar ist, das einen der mehrpoligen Steckaufnahme des Mobilfunkgeräts entsprechenden Stecker zur Verbindung mit der Steckaufnahme enthält und mit einem Ladekabel (5) verbunden ist.

## Beschreibung

Die vorliegende Erfindung betrifft eine KFZ-Halterung für Mobilfunkgeräte mit einer mehrpoligen Steckaufnahme im Bodenbereich und einer Koax-Steckaufnahme im oberen Rückwandbereich.

Mobilfunkgeräte werden im allgemeinen durch eine Reihe von Zubehörkomponenten zu nützlichen Systemen erweitert, die einerseits eine Funktionserweiterung des Gerätes darstellen, andererseits grundsätzlich für ihren Betrieb notwendig sind.

Eine zentrale Zubehörkomponente für die Verwendung von Mobilfunkgeräten in Kraftfahrzeugen ist eine KFZ-Halterung für das Mobilfunkgerät, welche das Mobilfunkgerät einmal sicher mechanisch mit dem Kraftfahrzeug verbindet und zum anderen für alle notwendigen Lade- und/oder Hochfrequenz- und/oder Niederfrequenzverbindungen sorgt.

Bisher gibt es für die Verwendung von Mobilfunkgeräten in Kraftfahrzeugen sehr einfache Lösungen ohne jeglichen Komfort oder sehr umfangreiche Lösungen mit jeglichem Ausstattungskomfort. Dabei ist die Herstellung der komfortablen Alternative entsprechend teuer und der nachträgliche Einbau einer derartigen Lösung verlangt auch Veränderungen am Kraftfahrzeug wie z.B. Bohren bzw. das Freilegen verschiedener Leitungen.

Aufgabe der vorliegenden Erfindung ist es, eine KFZ-Halterung für Mobilfunkgeräte der eingangs genannten Art anzugeben, welche, ohne einen Eingriff am Kraftfahrzeug vorzunehmen, ausgehend von einer einfachen Variante leicht zu einer komfortablen Variante ausgebaut werden kann.

Diese Aufgabe wird für die eingangs genannte KFZ-Halterung erfindungsgemäß dadurch gelöst, daß zur Aufnahme des Mobilfunkgerätes eine Aufnahmeschale für das Mobilfunkgerät vorgesehen ist, welche in ihrem oberen Bereich einen der Koax-Steckaufnahme entsprechenden Koax-Stecker aufweist, der mit einer Antennenanschlußleitung verbindbar ist und welche in ihrem unteren Bereich mit einem aufsteckbaren beliebig bestückbaren Steckergehäuse verbindbar ist, das einen der mehrpoligen Steckaufnahmen des Mobilfunkgeräts entsprechenden Stecker zur Verbindung mit der Steckaufnahme enthält und mit einem Ladekabel verbunden ist.

Mit der erfindungsgemäßen KFZ-Halterung ist es möglich eine einfache KFZ-Halterung ohne große Eingriffe nachzurüsten, um so eine KFZ-Halterung zu erhalten, die einen bestimmten Komfort aufweist.

Zweckmäßige Ausgestaltungen der erfindungsgemäßen KFZ-Halterung ergeben sich aus den Unteransprüchen sowie aus der Beschreibung eines Ausführungsbeispiels in Verbindung mit der beigefügten Zeichnung.

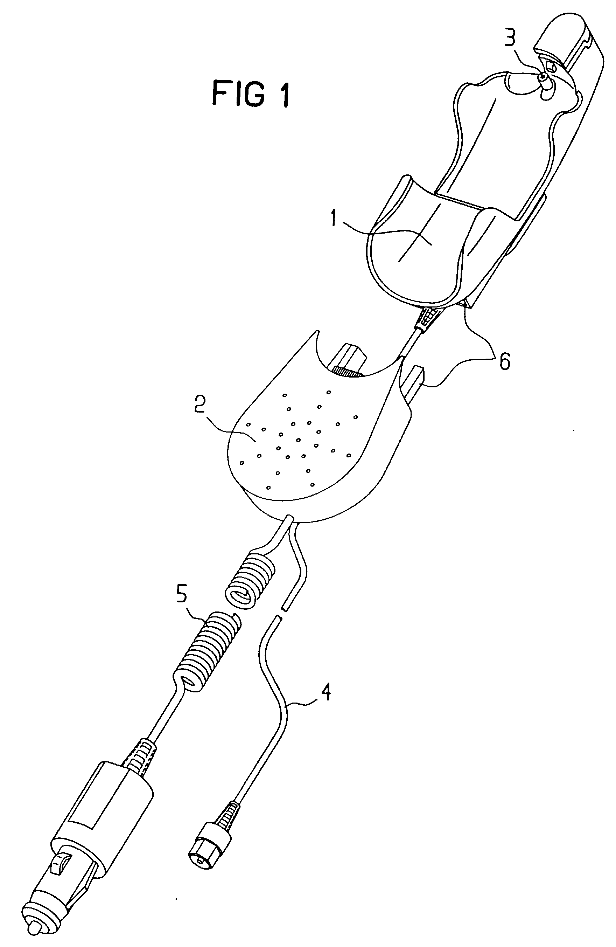

Es zeigen
Figur 1 eine perspektivische Darstellung einer erfindungsgemäßen KFZ-Halterung mit einem nicht aufgesteckten Steckergehäuse und

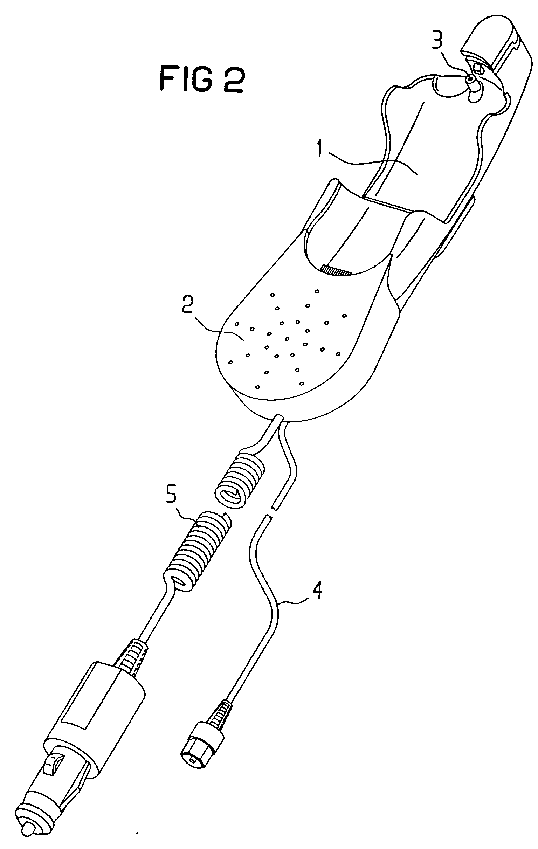

Figur 2 das die in Figur 1 gezeigte KFZ-Halterung mit aufgestecktem Steckergehäuse.

Die Aufnahmeschale 1 besitzt in ihrem oberen Bereich einen Koax-Stecker 3, welcher mit einer Antennenanschlußleitung 4 verbindbar ist. Diese Variante stellt die einfachste Ausführung einer KFZ-Halterung dar. Das Handy ist lediglich an einer externen Antenne angeschlossen.

Darüber hinaus ist die Aufnahmeschale 1 derartig ausgebildet, daß von unten ein Steckergehäuse 2 aufsteckbar ist. Dieses Steckergehäuse enthält einen mehrpoligen Stecker, welcher der mehrpoligen Steckaufnahme in dem Mobilfunkgerät (hier nicht gezeigt) entspricht. Damit stehen in dem Steckergehäuse alle Anschlüsse des Mobilfunkgeräts zur Verfügung.

Das Steckergehäuse kann z.B. über ein Ladekabel 5 mit einer Steckbuchse für den Zigarettenanzünder im Kraftfahrzeug verbunden werden. Damit ist eine externe Stromversorgung des Mobilfunkgeräts möglich.

Das Steckergehäuse 2 kann nun mit unterschiedlichen Baugruppen bestückt werden, je nachdem, mit welchem Komfort die KFZ-Halterung für das Mobilfunkgerät ausgestattet sein soll.

Über das Steckergehäuse 2 kann z.B. eine Verbindungsleitung zu einer Elektronikbox angeschlossen werden. Das Steckergehäuse kann auch ein Tastenpanel beinhalten, wobei dann über die Tasten ein Telematik-Carkit gesteuert werden kann. Eine andere weitere Variante wäre die Adaption eines Freisprech-Moduls.

Es sind erfindungsgemäß alle möglichen Bestückungen zur Vergrößerung des Bedienungskomforts des Mobilfunkgeräts für das Steckergehäuse denkbar.

## Patentansprüche

1. Kfz-Halterung für Mobilfunkgeräte mit einer mehrpoligen Steckaufnahme im Bodenbereich und einer Koax-Steckaufnahme im oberen Rückwandbereich,
**dadurch gekennzeichnet,**
daß zur Aufnahme des Mobilfunkgeräts eine Aufnahmeschale (1) für das Mobilfunkgerät vorgesehen ist, welche in ihrem oberen Bereich einen der Koax-Steckaufnahme entsprechenden Koax-Stecker (3) aufweist, der mit einer Antennenanschlußleitung (4) verbindbar ist, und welche in ihrem unteren Bereich mit einem aufsteckbaren beliebig bestückbaren Steckergehäuse (2) verbindbar ist, das einen der mehrpoligen Steckaufnahme des Mobilfunkgeräts entsprechenden Stecker zur Verbindung mit der Steckaufnahme enthält und mit einem Ladekabel (5) verbunden ist.

2. Kfz-Halterung nach Anspruch 1,
**dadurch gekennzeichnet,**
daß das Steckergehäuse (2) eine Freisprecheinrichtung enthält.

3. Kfz-Halterung nach Anspruch 1,
**dadurch gekennzeichnet,**
daß das Steckergehäuse (2) eine Verbindung mit einer Elektronik-Box aufweist.

4. Kfz-Halterung nach Anspruch 1,
**dadurch gekennzeichnet,**
daß das Steckergehäuse (2) eine Elektronik-Box enthält.

5. Kfz-Halterung nach Anspruch 1,
**dadurch gekennzeichnet,**
daß das Steckergehäuse (2) eine Verbindung mit einem Telematik-Carkit besitzt und ein Tastenpanel zu dessen Steuerung aufweist.

6. Kfz-Halterung nach einem der vorhergehenden Ansprüche,
**dadurch gekennzeichnet,**
daß das Steckergehäuse mit der Aufnahmeschale über eine Rastverbindung verrastbar ist.
